# EUROPEAN PATENT APPLICATION

(11) **EP 2 570 895 A1**
(43) Date of publication of application: **20.03.2013**
(21) Application number: 11780421.1
(22) Date of filing: 03.03.2011
(51) Int. Cl.: G06F 3/033

(54) **OPTICAL POINTING DEVICE, AND ELECTRONIC APPARATUS PROVIDED WITH SAME**

(30) Priority: 11.05.2010 JP 2010109338
(71) Applicant: Sharp Kabushiki Kaisha, Osaka-shi, Osaka 545-8522 (JP)
(72) Inventor: NORO, Tetsushi, Osaka-shi, Osaka 545-8522 (JP); MIYAKE, Takahiro, Osaka-shi, Osaka 545-8522 (JP); MIKI, Renzaburo, Osaka-shi, Osaka 545-8522 (JP)
(74) Representative: Müller - Hoffmann & Partner
(86) International application number: PCT/JP2011/054864
(87) International publication number: WO 2011/142163

(57) **Abstract**

To produce an ultrathin and easily assembled optical pointing device by reducing the number of components, an optical pointing device (10) of the present invention includes: a light source (2) for emitting light to an object (1); a light guide (6) for propagating therethrough light scattered by the object (1), the light guide including an image forming section (4) for forming an image with use of the light scattered by the object (1); and an image capturing section (7) for capturing the image with the light that has been scattered by the object (1) and that has exited the light guide (6). The light guide (6) guides a light beam (L) from the object via no air through an optical path extending from (i) a position where the light beam (L) enters the light guide to (ii) a position where the light beam exits the light guide (6).

## Description

### Technical Field

The present invention relates to an input device. More particularly, the present invention relates to (i) an optical pointing device capable of being mounted in a portable information terminal such as a mobile telephone and to (ii) an electronic apparatus including the optical pointing device.

### Background Art

A compact electronic apparatus, represented by a portable information terminal such as a mobile telephone and a PDA (personal digital assistant), typically includes a keypad as a user interface for inputting information. A keypad normally includes (i) a plurality of buttons for inputting numbers and characters and (ii) direction buttons (cross-key). As recent years have witnessed a portable information terminal including a display section capable of displaying a graphic and the like, an increasing number of such portable information terminals mainly use, as a system of displaying information toward a user, a GUI (graphical user interface) that allows a display section to carry out a two-dimensional display.

Portable information terminals have become highly functional as above and now have a display function equivalent to that of a computer. While conventional portable information terminals include an inputting means that uses a menu key and other function keys as direction keys, such an inputting means is inconveniently unsuited for selection of an icon and the like displayed through a GUI. There has thus been a growing demand that a portable information terminal should also include a pointing device, such as a mouse and touchpad for use with a computer, that allows a user to perform an intuitive operation.

Under such circumstances, there has been proposed, as a pointing device capable of being mounted in a portable information terminal, an optical pointing device that detects motion of an object by (i) observing, with use of an image capturing element, a pattern of the object, such as a fingertip, that is in contact with the device and (ii) extracting a change in the pattern of the object on the contact surface. Patent Literature 1, for example, discloses an optical pointing device that (i) emits light to an object on a contact surface with use of a light source such as an LED, (ii) causes light scattered by the object to be condensed onto an image capturing element with use of a condensing lens, (iii) continuously captures an image of the object with use of the image capturing element, such as an image sensor, (iv) extracts the amount of a change between data of a captured image and data of another image photographed immediately before the capture of the above image, and (v) calculates motion of the object on the basis of the change amount, to finally output an electric signal indicative of the motion of the object. Use of this optical pointing device allows, for example, a cursor displayed on a screen to follow motion of an object.

Patent Literature 1 discloses an optical system for use in an optical joystick. This optical system, in order to downsize the device and reduce its thickness, includes four elements: a first waveguide having a first reflecting surface and including a first planoconvex lens section; a second waveguide having a second reflecting surface and including a second planoconvex lens section; a cover with which an object comes into contact; and an aperture provided in a space between the first planoconvex lens section and the second planoconvex lens section. This conventional art causes light scattered by a surface of an object to (i) enter the cover, (ii) be guided through the first waveguide and the second waveguide, and (iii) form an image on an image capturing element. This conventional art, in order to reduce the thickness of the device, includes an optical-path transforming element in the first waveguide and the second waveguide and thus transforms an optical path so that it extends along a width direction of the device. This arrangement eliminates the need to increase the size of the device along a height direction of the device.

### Citation list

### Patent Literature 1

Japanese Patent Application Publication (Translation of PCT Application), *Tokuhyou,* No. 2008 -510248 (Publication Date: April 3, 2008)

### Summary of Invention

### Technical Problem

Conventional optical pointing devices are, however, disadvantageous as follows: A light beam scattered by an object passes, along a pathway extending to a position at which the light beam enters an image capturing section, through the inside of at least (i) a cover section for protecting the optical pointing device from an external impact and the like and (ii) a waveguide for forming an image with use of light scattered by the object. This waveguide, which includes a plurality of components, requires a plurality of production steps and assembly steps during its production, which in turn makes it impossible to produce a low-cost optical pointing device. Further, the above waveguide, which includes a large number of components, requires a high-precision assembly, which leads to a decrease in production yield.

In addition, since a conventional optical pointing device includes a plurality components and each member requires a structure for its assembly, it is difficult to produce a thin optical pointing device.

The present invention has been accomplished in view of the above problems. It is an object of the present invention to provide an ultrathin and easily assembled optical pointing device by reducing the number of components therein and (ii) an electronic apparatus including the optical pointing device.

### Solution to Problem

In order to solve the above problems, an optical pointing device of the present invention includes: a light source for emitting light to an object; a light guide for propagating therethrough light having been scattered by the object, the light guide including an image forming section for forming an image with use of the scattered light; and an image capturing section for capturing the image with use of the scattered light having exited the light guide, the light guide guiding the scattered light via no air through an optical path extending from (i) a position at which the scattered light enters the light guide to (ii) a position at which the scattered light exits the light guide.

The above arrangement includes a light guide that guides the scattered light via no air through an optical path extending from (i) a position at which the scattered light enters the light guide to (ii) a position at which the scattered light exits the light guide. In other words, the above arrangement includes a single light guide including an entrance section, an image forming section, and an exit section. The above arrangement can thus reduce the number of components included in the device, and makes it possible to produce an ultrathin optical pointing device. Reducing the number of components can in turn reduce costs of producing the optical pointing device. The above arrangement further improves assembly facility, and can thus improve yield. The above arrangement causes the light, scattered by the object, to be guided via no air through an optical path extending from (i) the position at which the light scattered by the object enters the light guide to (ii) the position at which the light scattered by the object exits the light guide. This arrangement prevents total reflection of the light scattered by the object and a light-amount loss from occurring when the scattered light passes through the interface between the light guide and an air layer. The above arrangement can thus reduce the light output of an LED, and makes it possible to produce an optical pointing device having a low power consumption. Further, high-precision preparation of a mold for forming the light guide enables high-precision production of a light guide having an image forming property.

### Advantageous Effects of Invention

The present invention reduces the number of components, and consequently achieves the advantage of producing (i) an ultrathin and easily assembled optical pointing device and (ii) an electronic apparatus including the optical pointing device.

Additional objects, features, and strengths of the present invention will be made clear by the description below. Further, the advantages of the present invention will be evident from the following explanation in reference to the drawings.

### Brief Description of Drawings

Fig. 1

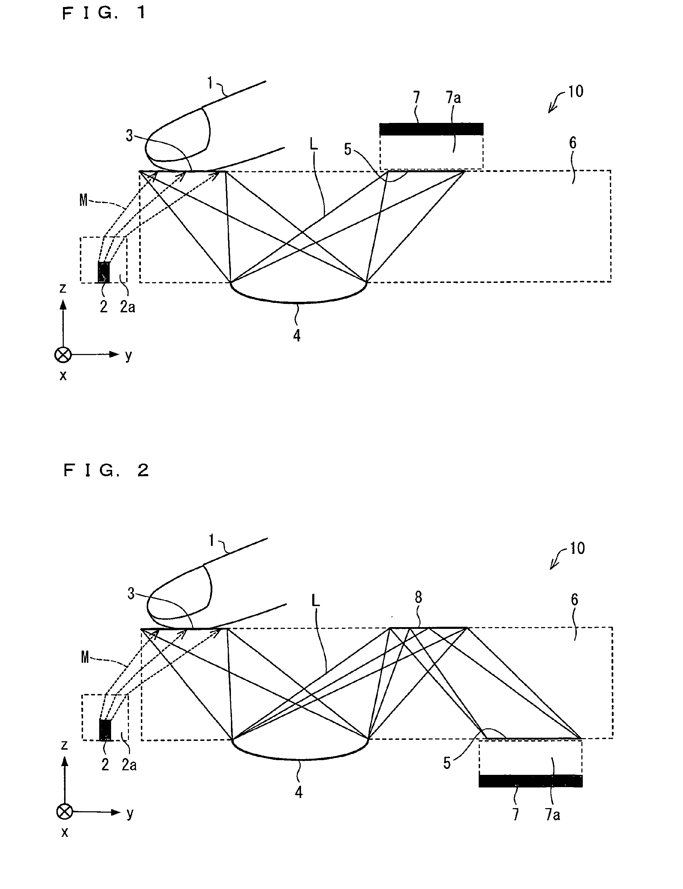

   Fig. 1 is a cross-sectional view schematically illustrating a configuration of an optical pointing device of the first embodiment.
Fig. 2
   Fig. 2 is a cross-sectional view illustrating another configuration of the optical pointing device illustrated in Fig. 1.
Fig. 3

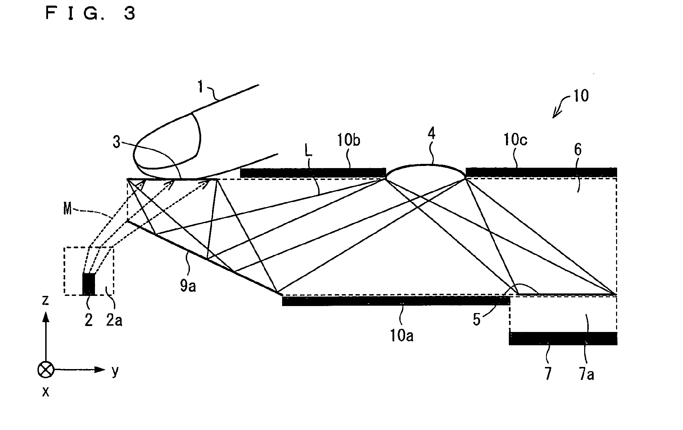

   Fig. 3 is a cross-sectional view illustrating still another configuration of the optical pointing device illustrated in Fig. 1.
Fig. 4

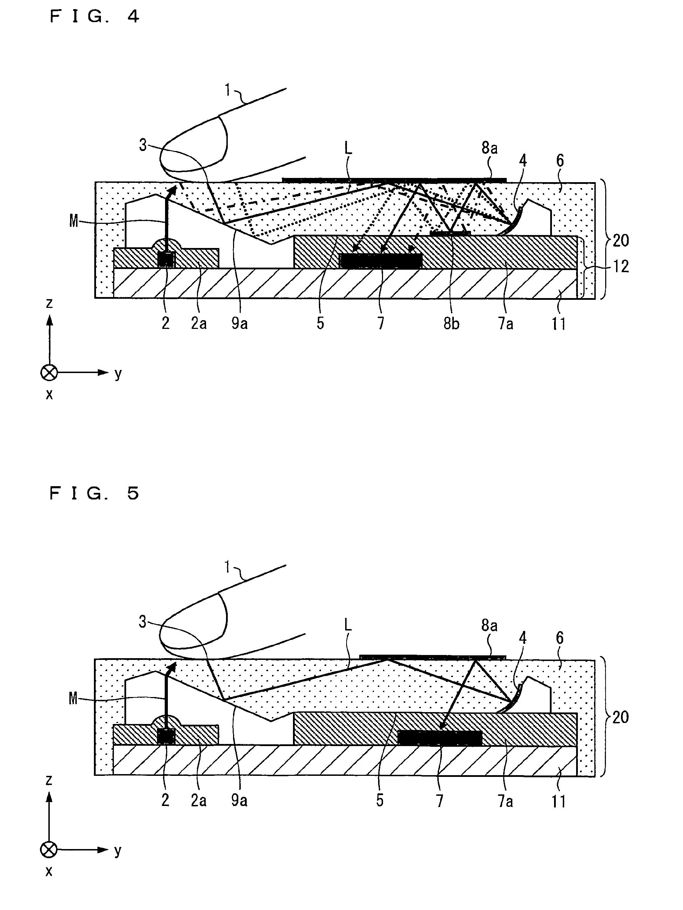

   Fig. 4 is a cross-sectional view schematically illustrating a configuration of an optical pointing device of the second embodiment.
Fig. 5
   Fig. 5 is a cross-sectional view illustrating another configuration of the optical pointing device illustrated in Fig. 4.
Fig. 6

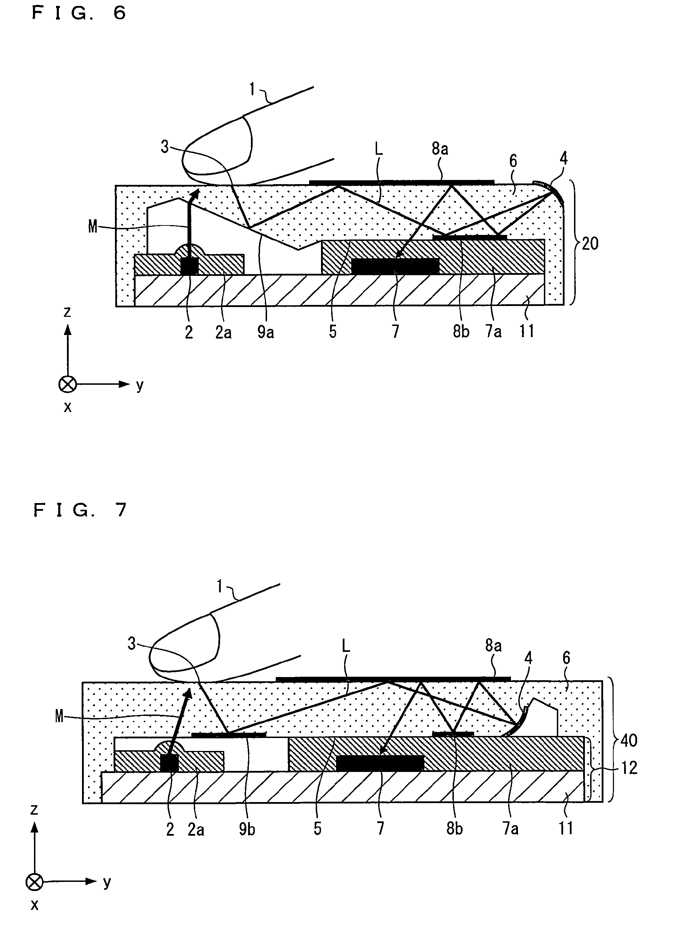

   Fig. 6 is a cross-sectional view illustrating still another configuration of the optical pointing device illustrated in Fig. 4.
Fig. 7
   Fig. 7 is a cross-sectional view schematically illustrating a configuration of an optical pointing device of the third embodiment.
Fig. 8
   (a) is a cross-sectional view illustrating a detailed shape of a diffracting element included in the optical pointing device illustrated in Fig. 7, and (b) through (e) are each a top view illustrating an example of a groove pattern for the diffracting element.
Fig. 9

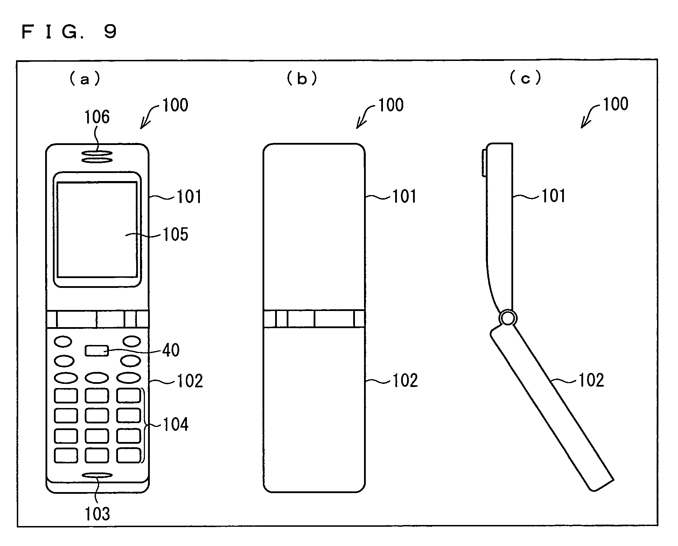

   Fig. 9 illustrates an example of a mobile telephone as an electronic apparatus including an optical pointing device of the present invention mounted therein, where (a) is an elevational view of an example appearance of the mobile telephone, (b) is a rear view of an example appearance of the mobile telephone, and (c) is a side view of an example appearance of the mobile telephone.

### Description of Embodiments

Embodiments of the present invention each describe, as an example, an optical pointing device including an LED (light emitting diode) as a light source. The present invention provides an optical pointing device that, in order to detect motion of an object, (i) emits light to the object, such as a fingertip, and (ii) causes an image capturing section to receive light reflected by the object. The description below deals in detail with an arrangement of an optical pointing device of each Embodiment. In the description below, members identical to each other in function and effect are assigned a common reference numeral, and an explanation thereof is omitted as appropriate.

### [First Embodiment]

The description below deals with a first embodiment of the present invention with reference to Figs. 1 through 3. Fig. 1 is a cross-sectional view schematically illustrating an arrangement of an optical pointing device 10 of the first embodiment. The optical pointing device 10 of the present invention, as illustrated in Fig. 1, includes: a light source 2 for emitting light to an object 1; a light guide 6 for propagating through itself light scattered by the object 1; and an image capturing section 7 for capturing an image of the object 1, the image being formed of light exiting from an exit section 5 of the light guide 6. The light guide 6 is arranged such that (i) light scattered by the object 1 enters the light guide at an entrance section 3, (ii) an image is formed of the light at an image forming section 4, and (iii) the light exits the light guide at an exit section 5.

Fig. 1 illustrates, for simplification of an explanation, the object 1 being separated from the light guide 6. In actuality, however, the object 1 is in contact with an upper surface of the light guide 6 for use of the optical pointing device 10.

For further simplification of an explanation, the description below assumes (i) "z axis" for a thickness direction of the optical pointing device 10 (corresponding to the longitudinal direction of Fig. 1) and (ii) "y axis" for a width direction of the optical pointing device 10 (corresponding to the lateral direction of Fig. 1). The z axis has a positive direction that extends upward from below the optical pointing device 10, whereas the y axis has a positive direction (light-guide direction) that extends from the light source 2 to the image capturing section 7. The description below refers to (i) the positive direction of the z axis as "vertical direction" as well and (ii) the positive direction of the y axis as "horizontal direction" as well. Further, the description below assumes "x axis" for a depth direction of the optical pointing device 10, the x axis having a positive direction that extends toward the surface of Fig. 1 from beyond the optical pointing device 20 illustrated in therein.

As illustrated in Fig. 1, the light source 2 emits a light beam M, which passes through the inside of a light-transmitting resin 2a sealing the light source 2 and then passes through the light guide 6 to be incident on the object 1 and thus scattered by a surface (roughness) of the object 1. The light scattered by the object 1 has a portion that enters the light guide 6 at the entrance section 3 included in therein. This portion (referred to as "light beam L") that has entered the light guide at the entrance section 3 is focused and reflected by the image forming section 4, which is provided at a lower surface of the light guide 6. The image forming section 4 serves to (i) reflect the light beam L that has entered the light guide and (ii) focus the light beam L thus reflected. For a concise explanation, the description below refers to such a function of the image forming section 4 for reflecting and focusing light as simply "focusing and reflecting" light.

An example of the image forming section 4 is, in order to focus and reflect a light beam L that has entered the light guide, a reflecting/condensing lens provided with a reflecting film deposited thereon. Examples of the deposited reflecting film include (i) a metal film made of aluminum, nickel, gold, or silver and (ii) a dielectric dichroic film. The image forming section 4 may be provided with, on a lens surface, (i) the above reflecting film or (ii) a dielectric multilayer film including a stack of dielectric films that are each higher in reflectance than a metal. The image forming section may alternatively be provided with, as a metal reflection-increasing film, a film including a stack of (i) a metal film formed by deposition of aluminum or the like and (ii) a dielectric film. Such a film is higher in reflectance than a film formed by deposition of a metal as a simple substance.

The image forming section 4 may have a surface that is shaped as a spherical surface having a single radius of curvature. The image forming section 4 may alternatively have a surface that is, in order to correct optical aberration (such as astigmatism, spherical aberration, and coma aberration) and distortion in an object image at the image capturing section 7, shaped as a toroidal surface that has a difference in the radius of curvature between (i) a light-guide direction (that is, the positive direction of the y axis in Fig. 1) and (ii) a direction perpendicular to a wave-guide direction (that is, the direction perpendicular to the y and z directions in Fig. 1; the x direction). The image forming section 4 may further alternatively have a surface that is shaped as an aspheric surface or a free-form surface. The image forming section 4, however, desirably has a surface that is shaped as a relatively simple surface for facility in assembling the optical pointing device 10.

The image forming section 4, which is shaped as described above, reflects and focuses the light beam L, which then exits the light guide 6 at the exit section 5 included in the light guide 6. The light beam L is, after exiting the light guide 6 at the exit section 5, focused upon the image capturing section 7. The optical pointing device 10 illustrated in Fig. 1 is arranged such that light scattered by the object 1 is, after entering the light guide 6 at the entrance section 3 included therein, guided in the positive direction of the y axis along a pathway through which the scattered light reaches the exit section 7.

In the optical pointing device 10 of the present embodiment, the light guide 6 serves to (i) receive light scattered by the object 1, (ii) form an image with use of the received light, and (iii) emit such light to the image capturing section. Light that has been scattered by the object 1 and that has then entered the light guide at the entrance section is guided through the inside of the light guide 6 in the positive direction of the y axis until an image is formed of the light and emitted (that is, guided along a pathway extending to a position at which the scattered light reaches the exit section 5). The light guide 6 characteristically includes only a single material at least at a portion ranging from the entrance section 3 to the exit section 5.

The optical pointing device 10 illustrated in Fig. 1 is arranged such that the object 1 comes into direct contact with the upper surface of the light guide 6. The optical pointing device thus includes no cover section as a separate member. The light guide 6 serves to guide scattered light and also serves as a cover section. This arrangement can reduce the thickness of the optical pointing device by at least a portion corresponding to such a cover, and thus makes it possible to produce an ultrathin optical pointing device. The above arrangement also reduces the number of members included in an optical pointing device, and can thus reduce costs. The above arrangement further eliminates the need to position the individual members of an optical pointing device with high precision during assembly, and can thus improve production yield.

In an optical system that includes a plurality of elements to form an image with use of light scattered by an object, there occurs, when a light beam passes through respective interfaces of different materials, a loss in the amount of the light beam. The light guide 6 in the optical pointing device 10 of the present embodiment is, in contrast, arranged to guide (propagate) scattered light through the inside of a single material (i) after such light scattered by the object 1 enters the light guide, the light then forming an image, and (ii) until the scattered light exits the light guide. This arrangement eliminates the possibility that there occurs, when light passes through different materials, a loss in the amount of such light. The above arrangement of the optical pointing device 10 of the present embodiment can thus guide light scattered by the object 1 to the image capturing section 7 efficiently. This arrangement in turn allows reduction in the output of light from the light source 2, and makes it possible to produce an optical pointing device 10 having a lower power consumption. The optical pointing device 10 of the present embodiment, which includes a light guide 6 having the above arrangement, simply needs to include an image capturing section 7 behind the exit section 5 of the light guide 6 in order to capture an image indicative of motion of the object 1.

In the optical pointing device 10 illustrated in Fig. 1, the light source 2 and the image capturing section 7 are provided respectively with molded light-transmitting resins 2a and 7a for surface protection. The light source 2 and the image capturing section 7 may not be provided respectively with molded light-transmitting resins 2a and 7a. The light source 2 and the image capturing section 7 are, however, desirably provided respectively with molded light-transmitting resins 2a and 7a on the surface because such surface protection can improve durability of the light source and the image capturing section. The light-transmitting resins 2a and 7a are each made of, for example, (i) a thermosetting resin such as a silicone resin and an epoxy resin or (ii) a thermoplastic resin such as an acrylic resin and a polycarbonate resin. The light-transmitting resin 7a is desirably made of, for example, a material that has a refractive index identical to that of the light guide 6 with respect to light having a wavelength of 850 nm. The light-transmitting resin 7a may alternatively be made of a material having a refractive index that is different from that of the light guide 6 by not greater than 0.3. The use of such a material allows a light-amount loss and total reflection at the interface between the light-transmitting resin 7a and the light guide 6 to be each reduced to a level that is not problematic in practice. In the case where the light-transmitting resin 7a and the exit section 5 are separated from each other as illustrated in Fig. 1, the light-transmitting resin 7a and the exit section 5 are desirably separated from each other by a space that is filled with an adhesive and that includes no air layer for prevention of a light-amount loss and total reflection at the interface between the light-transmitting resin 7a and the light guide 6.

Fig. 2 is a cross-sectional view illustrating another configuration of the optical pointing device 10 illustrated in Fig. 1. The optical pointing device 10 illustrated in Fig. 2 includes (i) a reflecting surface 8 provided on a surface of a light guide 6 with which surface an object 1 comes into contact and (ii) an image capturing section 7 provided on a side of the light guide 6 which side is opposite to the side on which the object 1 is present.

Light scattered by the object 1 partially enters the light guide 6 at an entrance section 3. A light beam L that has entered the light guide at the entrance section 3 is focused and reflected by an image forming section 4 provided on a lower surface of the light guide 6. The image forming section 4 is, in order to focus and reflect the light beam L that has entered the light guide, a reflecting/ condensing lens similar to the image forming section 4 illustrated in Fig. 1, for example, a reflecting/condensing lens on which is deposited a metal film, a dielectric multilayer film, or a metal reflection-increasing film. The light beam L reflected by the image forming section 4 is guided through the inside of the light guide 6 in the positive direction of the y axis. The light beam L is then reflected by the reflecting surface 8 on an upper surface of the light guide 6 so that the optical path of the light beam L is so transformed as to extend in a direction toward the side of an exit section 5. The light beam L then exits the light guide at the exit section 5 provided on the lower surface of the light guide 6. The light beam L that has exited the light guide 6 is focused upon an image capturing section 7.

Light scattered by the object 1 is, after entering the light guide 6 at the entrance section 3 included therein, guided in the positive direction of the y axis along a pathway through which the scattered light travels as reflected by the image forming section 4 and the reflecting surface 8 to reach the exit section 7. The reflecting surface 8 has a function of reflecting, toward the side of the exit section 5, a light beam L that has been reflected and focused by the image forming section 4. The reflecting surface 8 is provided with a reflecting film. The reflecting film deposited on the reflecting surface 8 is, for example, (i) a metal film made of aluminum, nickel, gold, or silver or (ii) a dielectric dichroic film.

In the optical pointing device 10 illustrated in Fig. 1, a light beam L focused by the image forming section 4 exits the light guide at the exit section 5 provided on the upper surface of the light guide 6. The image capturing section 7 is thus provided above the light guide 6. In the optical pointing device 10 illustrated in Fig. 2, on the other hand, a light beam L focused by the image forming section 4 (i) is reflected by the reflecting surface 8 on the front surface of the light guide 6 so that the optical path of the light beam L is transformed, and then (ii) exits the light guide at the exit section 5 on the lower surface of the light guide 6 to form an image on the image capturing section 7. The image capturing section 7 is thus provided below the light guide 6. In other words, since the optical pointing device 10 illustrated in Fig. 2 is arranged such that the reflecting surface 8 provided on the upper surface of the light guide 6 transforms the optical path of a light beam L, the image capturing section 7 is provided on the lower surface of the light guide 6. The optical pointing device 10 illustrated in Fig. 2 differs from the optical pointing device of Fig. 1 at this point.

The optical pointing device 10 illustrated in Fig. 2 can thus include a light source 2 and an image capturing section 7 that are provided on an identical plane. Mounting the light source 2 and the image capturing section 7 on an identical substrate eliminates the need to separately prepare a substrate on which a light source 2 is to be mounted and a substrate on which an image capturing section 7 is to be mounted. The above arrangement can consequently further reduce the number of components.

The optical pointing device 10 illustrated in Fig. 2 is arranged, as in the optical pointing device of Fig. 1, such that the light source 2 and the image capturing section 7 are provided respectively with molded light-transmitting resins 2a and 7a for surface protection. The light-transmitting resins 2a and 7a are each made of, for example, (i) a thermosetting resin such as a silicone resin and an epoxy resin or (ii) a thermoplastic resin such as an acrylic resin and a polycarbonate resin.

Fig. 3 is a cross-sectional view illustrating still another configuration of the optical pointing device 10 illustrated in Fig. 1. The optical pointing device 10 illustrated in Fig. 3 includes, below an entrance section 3 of a light guide 6, a prism (optical path transforming section) 9a as an optical path transforming section.

As illustrated in Fig. 3, light scattered by an object 1 enters the light guide 6 at the entrance section 3. A light beam L that has entered the light guide at the entrance section 3 reaches the prism 9a, provided below the entrance section 3 and serving as an optical path transforming section, the prism transforming the optical path of the light beam L. The light beam L, which has an optical path that has been transformed by the prism 9a, is focused and reflected by an image forming section 4 provided on an upper surface of the light guide 6. The image forming section 4 is, in order to focus and reflect the light beam L that has entered the light guide, a reflecting/condensing lens similar to the image forming section 4 illustrated in Fig. 1, for example, a reflecting/condensing lens on which is deposited a metal film, a dielectric multilayer film, or a metal reflection-increasing film. The light beam L, which has been reflected and focused by the image forming section 4, exits the light guide at an exit section 5 provided on a lower surface of the light guide 6 and then enters an image capturing section 7.

The light guide 6 in the optical pointing device 10 illustrated in Fig. 3 is provided with light blocking sections 10a, 10b, and 10c in regions of a surface of the light guide which regions are other than the entrance section 3, the prism 9a, the image forming section 4, and the exit section 5.

Light scattered by the object 1 is, after entering the light guide 6 at the entrance section 3 included therein, guided in the positive direction of the y axis along a pathway through which the scattered light travels as reflected by the prism 9a and the image forming section 4 to reach the exit section 7.

The optical pointing device 10 illustrated in Fig. 3 differs from those of Figs. 1 and 2 in that it includes a prism 9a in a pathway through which light scattered by the object 1 and entering the light guide 6 at the entrance section 3 reaches the image forming section 4. In other words, the optical pointing device 10 illustrated in Fig. 3 is arranged such that light scattered by the object 1 is guided to the image forming section 4 with use of the prism 9a provided directly below the entrance section 3.

Providing a prism 9a directly below the entrance section 3 as above allows a light beam L entering the light guide at the entrance section 3 to be caught at a greater angle, and consequently allows light scattered by the object 1 to be efficiently guided to the side of the image forming section 4. The optical pointing device 10 illustrated in Fig. 3 can thus increase the amount of signal light at the image capturing section 7, which can in turn reduce the light output of a light source 2 and power consumption by the light source 2.

The prism 9a is provided with a reflecting film deposited on a surface thereof. The reflecting film is, for example, (i) a metal film made of aluminum, nickel, gold, or silver, (ii) a dielectric dichroic film, or (iii) a reflection-increasing film made of a dielectric or a metal. The prism 9a is, to prevent light from being lost in amount due to reflection, desirably disposed at such an angle that a light beam L having entered the light guide at the entrance section 3 is totally reflected.

The optical pointing device 10 illustrated in Fig. 3 is arranged such that the light guide 6 is provided with light blocking sections 10a, 10b, and 10c in regions of a surface of the light guide which regions are other than the entrance section 3, the prism 9a, the image forming section 4, and the exit section 5. The optical pointing device illustrated in Fig. 3 differs from those of Figs. 1 and 2 at this point. If (i) light scattered by the object 1 directly enters the image capturing section 7 or (ii) a light beam that has not traveled through an image formation pathway enters the image capturing section 7, there occurs noise at the image capturing section 7. Such noise causes the optical pointing device 10 to malfunction, and thus decreases operability of the optical pointing device 10. Noise included in the amount of signal light can be effectively reduced by, as illustrated in Fig. 3, providing light blocking members 10a, 10b, and 10c to the periphery of the effective diameter of each element (such as the prism 9a and the exit section 5) included in the image forming system.

### [Second Embodiment]

A second embodiment of the present invention is described below with reference to Figs. 4 through 6. Fig. 4 is a cross-sectional view schematically illustrating a configuration of an optical pointing device 20 of the second embodiment. The optical pointing device 20 differs from the first embodiment in that a light beam (i) is reflected by an image forming section 4, provided inside a light guide 6, in a direction (that is, a negative direction of the y axis) opposite to a light-guide direction and thus (ii) forms an image. The description below does not deal with points of the second embodiment that are identical to those of the first embodiment.

Fig. 4 illustrates an object 1 that is in contact with an upper surface of the light guide 6. This object is a fingertip or the like, and is a target object of which the optical pointing device 20 detects motion. Fig. 4 illustrates for convenience an object 10 being small in comparison with the optical pointing device 20 in order to facilitate understanding the state of the object relative to the optical pointing device 20.

The optical pointing device 20, as illustrated in Fig. 4, includes: a light source 2 for emitting light to an object 1; a light guide 6 for propagating through itself light scattered by the object 1; and an image capturing section 7 for capturing an image formed by light (image forming light) emitted from the light guide 6, the light source 2 and the image capturing section 7 being mounted on a circuit board 11.

The light guide 6 in the optical pointing device 20 is arranged such that (i) light scattered by the object 1 enters the light guide at an entrance section 3, (ii) an image is formed of the light at an image forming section 4, and (iii) the light exits the light guide at an exit section 5. Further, the light guide includes a flange section, which is provided to adjust accuracy for combination with the circuit board 11 during assembly of the optical pointing device 20. Fig. 4 illustrates no detailed shape for the flange section. The flange section is, for example, formed integrally with the light guide 6 by injection molding or the like.

The description below deals with a pathway through which a light beam as scattered by the object 1 reaches the image capturing section 7.

First, the light source 2 emits a light beam M to the object 1 that is in contact with the upper surface of the light guide 6. The light beam M emitted from the light source 2 passes through a light-transmitting resin 2a that protects the light source 2, and is then refracted by a prism 9a to irradiate the object 1. This indicates that the light beam M emitted from the light source 2 is incident on the object 1 in an oblique direction (that is, at an angle of incidence with respect to the object 1).

The light guide 6 is made of a material having a refractive index larger than that of air. Thus, in the case where the object 1 is not in contact with the upper surface of the light guide, the light beam M that has reached the upper surface of the light guide 6 partially passes through the upper surface of the light guide 6, whereas the remaining part of the light beam M is totally reflected by the upper surface of the light guide 6. In the case where the light beam M is incident on the upper surface of the light guide 6 at an incidence angle that meets a condition for total reflection, the light beam M does not pass through the upper surface of the light guide 6, and is totally reflected to travel toward the center of the light guide 6. In the case where the object 1 is in contact with the upper surface of the light guide, the light beam M is reflected by a surface of the object 1 to travel toward the center of the light guide 6 from the entrance section 3 of the light guide 6. The light source 2 is an LED or the like, and is preferably a high-luminance infrared-light-emitting diode in¥ particular. The material of the light guide 6 is described later in detail.

In the case where the object 1 is in contact with the upper surface of the light guide 6, the light beam M emitted from the light source 2 is diffuse-reflected by the surface of the object 1. The light beam M that has been reflected by the surface of the object 1 enters the light guide at the entrance section 3 and then propagates through the inside of the light guide 6. A light beam L, which has entered the light guide at the entrance section 3, is totally reflected by the prism 9a and is then guided in the positive direction of the y axis. The light beam L that has been totally reflected by the prism 9a is reflected by a reflecting surface 8a to reach the image forming section 4. The light beam L is then reflected by the image forming section 4 to travel in an opposite direction, that is, in the negative direction of the y axis. The light beam L is next reflected by the reflecting surface 8a and a reflecting surface 8b alternately (repeatedly) to exit the light guide at the exit section 5 of the light guide 6. The light beam L that has exited the light guide at the exit section 5 of the light guide 6 is incident on the image capturing section 7.

As described above, the optical pointing device 20 of the present embodiment includes a light guide 6 including (i) an entrance section 3 for causing a part of light scattered by the object 1 to enter the light guide 6, (ii) a prism 9a provided directly below the entrance section 3 and serving to transform the optical path (traveling direction) of the above light, scattered by the object 1 and entering the light guide at the entrance section 3, so that the optical path extends toward the side of the image forming section 4, (iii) an image forming section 4 for forming an image with use of a light beam L (light scattered by the object 1) incident from the entrance section 3, and (iv) an exit section 5 for emitting, to the image capturing section 7, the light beam L (image forming light) focused by the image forming section 4.

The light guide 6 is arranged such that a light beam L that has entered the light guide at the entrance section 3 is guided inside the light guide 6 (i) in the positive direction of the y axis through an optical path that extends to a position at which the light beam L is reflected by the image forming section 4 and (ii) in the negative direction of the y axis through an optical path that extends from the image forming section 4 to a position at which the light beam L reaches the image capturing element 7. In other words, the light beam L propagating through the light guide 6 has a light-guide direction that is transformed by the image forming section 4 from the positive direction of the y axis into the negative direction of the y axis. The light guide 6 includes only a single material at a portion ranging from the entrance section 3 to the exit section 5. When the optical pointing device 20 is in use, the object 1 comes into contact with the upper surface of the light guide 6. With the light guide 6 having an additional function as a cover as above, the optical pointing device does not need to include a cover as a separate member. The optical pointing device 20 can thus have a thickness reduced by a portion corresponding to such a cover, and can be an ultrathin optical pointing device. The above arrangement also reduces the number of members included in an optical pointing device, and can thus reduce costs. The above arrangement further eliminates the need to position the individual members of an optical pointing device with high precision during assembly, and can thus improve production yield.

In an optical system that includes a plurality of elements to form an image with use of light scattered by an object, there occurs, when a light beam passes through different materials, a loss in the amount of a light beam generated. The light guide 6 in the optical pointing device 10 of the present embodiment is, in contrast, arranged to guide scattered light through the inside of a single material (i) after such light scattered by the object 1 enters the light guide, the light then forming an image, and (ii) until the scattered light exits the light guide. This arrangement eliminates the possibility that there occurs, when light passes through different materials, a loss in the amount of such light. The above arrangement can thus guide light scattered by the object 1 to the image capturing section 7 efficiently. This arrangement in turn makes it possible to produce an optical pointing device 20 having a lower power consumption. Further, the light guide 6 is arranged such that light propagating therethrough (light beam L) has an optical path that is bent by the image forming section 4. This arrangement allows the optical path from the entrance section 3 to the exit section 5 to be large in length. The optical pointing device can thus, even if it is designed to prevent optical aberration (such as astigmatism, spherical aberration, and coma aberration), include a light guide 6 that has a length in the y axis direction which length is smaller than the optical path length of a light beam L. This in turn makes it possible to produce a small and thin optical pointing device 20.

As illustrated in Fig. 4, the present embodiment includes, mounted on the circuit board 11, (i) a light source 2 for emitting light to an object 1 and (ii) an image capturing section 7 for capturing an image formed by light scattered by the object 1. The light source 2 and the image capturing section 7 are sealed with light-transmitting resins 2a and 7a, respectively. The light source 2 and the image capturing section 7, which are provided with the respective light-transmitting resins 2a and 7a, each have a protected surface and improved durability. The light-transmitting resins 2a and 7a are each made of, for example, (i) a thermosetting resin such as a silicone resin and an epoxy resin or (ii) a thermoplastic resin such as an acrylic resin and a polycarbonate resin.

The description below deals with an arrangement of the circuit board 11. The optical pointing device 20 of the present embodiment includes a single circuit board 11, on which a light source 2 and an image capturing section 7 are mounted. The light source 2 and the image capturing section 7 are electrically connected to the circuit board 11 by wire-bonding mounting or flip-chip mounting. The circuit board 11 is provided with a circuit formed on a surface thereof. The circuit formed on the circuit board 11 serves to, for example, (i) control timing at which the light source 2 emits light and (ii) receive an electric signal outputted from the image capturing section 7 and thus detect motion of the object 1. The circuit board 11 is flat and made of a single material. The circuit board includes, for example, a printed circuit board and a lead frame.

The image capturing section 7 receives a light beam L emitted from the light source 2 and reflected by the object 1. The image capturing section (i) forms an image of the object above the entrance section 3 with use of the light received, and (ii) converts the light into image data. Specifically, the image capturing section 7 is an image sensor (image capturing element) such as a CMOS and a CCD. The image capturing section 7 includes a DSP (digital signal processor [computing section]; not shown), which obtains image data from the light beam L received. The image capturing section 7 continues to photograph an image of the object 1 at predetermined intervals in accordance with an instruction by the circuit board 11.

In the case where the object 1 that is in contact with the entrance section 3 has moved, an image photographed by the image capturing section 7 is different from an image that is photographed immediately previously. The image capturing section 7 causes its DSP to (i) compare, for a particular position, the value of data of the currently photographed image with the value of data of the immediately previously photographed image and thus (ii) calculate the amount and direction of the movement of the object 1. In other words, in the case where the object 1 that is in contact with the entrance section 3 of the light guide 6 has moved, data of a photographed image indicates a value different by a certain amount from the value of corresponding data of an immediately previously photographed image. The image capturing section 7 causes its DSP to calculate, from such a certain amount, the amount and direction of movement of the object 1. The image capturing section 7 supplies, to the circuit board 11, an electric signal indicative of the calculated amount and direction of movement. The DSP may be provided in the circuit board 11 instead of inside the image capturing section 7. In such a case, the image capturing section 7 sequentially transmits data of captured images to the circuit board 11.

The operation of the image capturing section 7 is recapped as follows: In the case where there is no object 1 over the entrance section 3, the image capturing section 7 captures an image of the entrance section 3. In the case where an object 1 is in contact with the entrance section 3, the image capturing section 7 captures an image of a surface of the object 1. In the case where, for instance, the object 1 is a fingertip, the image capturing section 7 captures an image of a fingerprint of the fingertip. In this case, the image capturing section 7 captures an image having data that is different from data of an image captured when there is no object 1 over the entrance section 3. The DSP of the image capturing section 7 thus transmits, to the circuit board 11, a signal indicating that an object 1 is in contact with the entrance section 3. Then, in the case where the object 1 has moved, the DSP compares data of a captured image with data of an immediately previously captured image to calculate the amount and direction of the movement of the object 1. The DSP then transmits, to the circuit board 11, a signal indicative of the calculated amount and direction of the movement.

The following describes the light-transmitting resins 2a and 7a and the circuit board 11. In the optical pointing device 20 illustrated in Fig. 4, the light-transmitting resins 2a and 7a each have a substantially cuboid shape. The light-transmitting resins 2a and 7a each have a bottom surface that is in tight contact with a top surface of the circuit board 11. The light-transmitting resins 2a and 7a have respective hollow sections that come into tight contact with the light source 2 and the image capturing section 7, respectively. The light source 2 and the image capturing section 7 both mounted on the circuit board 11 are, as described above, sealed with the light-transmitting resins 2a and 7a, respectively. The circuit board 11, the light source 2, the image capturing section 7, and the light-transmitting resins 2a and 7a are thus integrated with one another to provide a substrate section 12. This arrangement can reduce the number of (i) components included in the optical pointing device 20 and (ii) steps for assembling it. This arrangement can consequently reduce costs of producing the optical pointing device 20, and makes it possible to produce an optical pointing device 20 that is high in accuracy of detecting an object 1.

The following describes an arrangement and shape of the light guide 6 in detail. The light guide 6 includes, for example, a flange section for assembly of the optical pointing device 20. The light guide serves to protect the individual sections and elements (for example, the light source 2 and the image capturing section 7) included in the optical pointing device 20. The light guide 6 is so provided over the substrate section 12 as to be in tight contact with side surfaces and top surface of the substrate section 12. The description below uses the term "rear surface" for the light guide 6 to refer to a surface of the light guide 6 which surface is (i) located on the negative side of the z axis and which surface is (ii) not exposed to the outside in a state in which the light guide is mounted on the substrate section 12 for assembly of the optical pointing device 20. In other words, the term "rear surface" refers to a surface of the light guide 6 which surface faces the substrate section 12. Further, the description below uses the term "bottom surface" for the light guide 6 to refer to a surface of the light guide 6 which surface is (i) opposite to a surface with which an object 1 comes into contact and which surface is (ii) exposed to the outside. This indicates that a portion (abutting surface) of the rear surface of the light guide 6 is in tight contact with the side surfaces and top surface of the substrate section 12. The bottom surface (abutting surface) of the light guide 6 is flush with a bottom surface of the substrate section 12. The top surface and bottom surface (abutting surface) of the light guide 6 are parallel to the bottom surface of the substrate section 12. The light guide 6 has two side surfaces each having an angle with respect to (i) the top surface and bottom surface (abutting surface) of the light guide 6 and (ii) the bottom surface of the substrate section 11. The "two side surfaces" of the light guide 6 refer to side surfaces of the light guide 6 that are not exposed to the outside and that are in contact with the substrate section 12. The two side surfaces of the light guide 6 that are angled as above are, for example, tapered surfaces (in which case the two side surfaces of the substrate section 12 are also tapered surfaces). This arrangement facilitates fitting the light guide 6 with the substrate section 12 during assembly. The light guide is, however, not limited as such in shape. The light guide may thus have two side surfaces that are perpendicular to the bottom surface as illustrated in Fig. 4.

The prism 9a illustrated in Fig. 4 is included in the light guide 6, and is positioned over the light source 2 and under the entrance section 3. The prism is provided in a hollow section in the rear surface of the light guide 6 which hollow section is positioned at a portion of the rear surface of the light guide 6 which portion is not in contact with the substrate section 11. The prism 9a has an inclined surface. The prism 9a uses this inclined surface to refract a light beam M emitted from the light source 2, and thus to transform the pathway of the light beam M so that the light beam M is directed to the object 1. The prism 9a further uses the inclined surface to totally reflect a light beam L as reflected by the object 1, and thus to transform the pathway of the light beam L so that the pathway extends inside the light guide 6 in the positive direction of the Y axis. In other words, the prism 9a reflects the above light, which has been reflected by the object 1 and has entered the light guide 6 at the entrance section 3, to guide the light in the horizontal direction. As described above, the prism 9a uses its inclined surface to allow a light beam M to pass through and to totally reflect a light beam L. The light guide 6 is made of, for example, a visible-light-absorbing polycarbonate resin or acrylic resin having a refractive index of approximately 1.5.

The image forming section 4 reflects and focuses light scattered by the object 1, and thus forms an image of the object 1 on the image capturing section 7. The image forming section 4 is provided above the image capturing section 7 and downstream in the positive direction of the y axis from the image capturing section 7. The image forming section 4 is provided in a hollow section in the rear surface of the light guide 6 which hollow section is positioned at a portion that is not in contact with the substrate section 11. The image forming section 4 of the optical pointing device 20 has a toroidal surface that has a difference in curvature between two directions orthogonal to each other. The image forming section 4 is, however, not limited as such in lens shape, and may have (i) a spherical surface that has an equal radius of curvature between two directions orthogonal to each other, (ii) an aspheric surface, or (iii) a free-form surface. The image forming section 4 of the optical pointing device 20 has a lens shape having a toroidal surface in order to correct optical aberration (such as astigmatism, spherical aberration, and coma aberration) and distortion occurring in an image at the image capturing section 7 with respect to two directions orthogonal to each other. The image forming section 4 uses this toroidal surface to reflect a light beam L so that the light beam L forms an image at the image capturing section 7. To reflect a light beam L efficiently, the image forming section 4 has a toroidal surface that is provided with, deposited thereon, a reflecting film made of a metal (for example, aluminum, nickel, gold, silver, and a dielectric dichroic film).

The reflecting surfaces 8a and 8b, each of which transforms the optical path of a light beam L guided through the inside of the light guide 6, each serve to, by reflection, (i) cause the light beam L, totally reflected by the prism 9a, to be incident on the image forming section 4 and (ii) cause the light beam L, reflected by the image forming section 4, to be incident on the image capturing section 7. The reflecting surfaces 8a and 8b are positioned on the top surface of the light guide 6 and above the image capturing section 7, respectively. The reflecting surfaces 8a and 8b are each formed by depositing a reflecting film on the top surface of the light guide 6. The reflecting surfaces 8a and 8b are each formed of a reflecting film that is exposed to the outside and that is thus clearly seen by a user. The reflecting film is thus desirably as inconspicuous as possible in appearance.

The reflecting surface 8b reflects a light beam L, reflected by the image forming section 4 and then by the reflecting surface 8a, so that the light beam L travels back toward the reflecting surface 8a. The reflecting surface 8b is positioned above the image capturing section 7 and downstream in the positive direction of the y axis from the image capturing section 7, and is positioned on the rear surface of the light guide 6. The reflecting surface 8b is formed by depositing a reflecting film on the rear surface of the light guide 6. The reflecting surfaces 8a and 8b are each preferably formed of a reflecting film that reflects light efficiently.

The following describes again a pathway through which a light beam emitted from the light source 2 is reflected by an object 1 and incident on the image capturing section 7. First, a light beam M emitted from the light source 2 passes through the prism 9a as refracted thereby, and then reaches a surface of the light guide 6. In the case where an object 1 is in contact with the entrance section 3 of the light guide 6, the light beam M is scattered by a surface of the object 1. The light beam M that has been reflected by the surface of the object 1 enters the light guide at the entrance section 3 and propagates through the inside of the light guide 6. The light beam L that has entered the light guide at the entrance section 3 is totally reflected by the prism 9a so that its traveling direction is transformed into the positive direction of the y axis. The light beam L that has been totally reflected by the prism 9a is reflected by the reflecting surface 8a to reach the image forming section 4. The light beam L is then reflected by the image forming section 4 to travel in a direction opposite to the light-guide direction, that is, in the negative direction of the y axis. The light beam L is next reflected by the reflecting surfaces 8a and 8b repeatedly to exit the light guide at the exit section 5 of the light guide 6. The light beam L that has exited the light guide 6 is incident on the image capturing section 7.

The optical pointing device 20 is arranged, as described above, such that the light guide 6 has a conventional function as a cover and another function as an image-forming optical system. The optical pointing device can thus, even if it is designed to have a large optical path length for its optical system to prevent optical aberration (such as astigmatism, spherical aberration, and coma aberration), include a light guide 6 that has a length in the y axis direction which length is smaller than the optical path length of a light beam L. This in turn makes it possible to produce a small and thin optical pointing device 20.

As described above, the optical pointing device 20 of the present embodiment is arranged such that the light guide 6 has both the function of guiding a light beam L and the function as a cover. This arrangement can reduce the number of (i) components included in the optical pointing device 20 and (ii) steps for assembling it. Further, reducing the number of components as such allows the optical pointing device to be assembled precisely, and improves product yield. The above arrangement can consequently reduce costs of producing the optical pointing device 20.

If assembly of the optical pointing device involves a light guide 6, an image forming section 4, and an image capturing section 7 as separate components, such assembly will require those components to each have such a shape for assembly as an abutting surface and an interlocking shape. Separate components having interlocking shapes for their interlocking, for example, will reduce tolerance. Further, if an interlocking shape is a complicated shape, the yield may be decreased. In contrast, in the case where, as in the optical pointing device 20, the light guide 6 is integrated with the image forming section 4 having an image forming property, the above complicated shape is unnecessary. In other words, in the case where the light guide 6 is integrated with the image forming section 4 having an image forming property, such integration can reduce the number of components, and eliminates the need for such a complicated shape for assembly as an abutting surface (edge portion) and an interlocking shape. Further, this arrangement, as long as it includes a minimally required optical surface, does not need an adjustment margin to be secured. This arrangement can in turn reduce the thickness of the light guide 6, and can consequently reduce the thickness (dimension in the z axis direction) of the optical pointing device 20.

Fig. 5 is a cross-sectional view illustrating another configuration of the optical pointing device 20 illustrated in Fig. 4. The optical pointing device 20 illustrated in Fig. 5 differs from that of Fig. 4 in that light scattered by an object 1 is, through an optical path extending from (i) an image forming section 4 in a light guide 6 to an exit section 5, reflected only once by a reflecting surface 8a. This arrangement allows an entrance section 3 in the light guide 6 to be separated from an image capturing section 7 by a larger distance. This arrangement can thus reduce noise caused by light incident on the image capturing section 7 without having traveled through the optical path (image-forming pathway) for a light beam L. The arrangement illustrated in Fig. 5, as a result, makes it possible to produce an optical pointing device 20 that is excellent in operability.

Fig. 6 is a cross-sectional view illustrating still another configuration of the optical pointing device 20 illustrated in Fig. 4. The optical pointing device 20 illustrated in Fig. 6 differs from those of Figs. 4 and 5 in that an image forming section 4 is provided on an upper surface of a light guide 6. The optical pointing device 20 illustrated in Fig. 6 is arranged such that light (light beam L) scattered by an object 1 and entering the light guide 6 at an entrance section 3 is totally reflected by a prism 9a, which serves as an optical path transforming section, so that the light beam L travels in a light-guide direction, that is, the positive direction of the y axis. The light beam L is then reflected by reflecting surfaces 8a and 8b to reach an image forming section 4.

The light beam L, as described above, travels from the prism 9a to reach the image forming section 4 after being reflected twice by the respective reflecting surfaces 8a and 8b. To achieve this, the optical pointing device 20 illustrated in Fig. 6 includes an image forming section 4 provided on the upper surface of the light guide 6. Since the image forming section 4 is provided on the upper surface of the light guide 6 as such, the above arrangement does not need to include a light guide 6 having a complicated shape for assembly. In the case where, for instance, the light guide 6 is prepared by molding, such molding is relatively easy. The above arrangement can thus reduce processing costs, and can consequently reduce costs of producing the optical pointing device 20. In addition, since the light guide 6 has a simple shape, the above arrangement improves molding accuracy and product yield.

### [Third Embodiment]

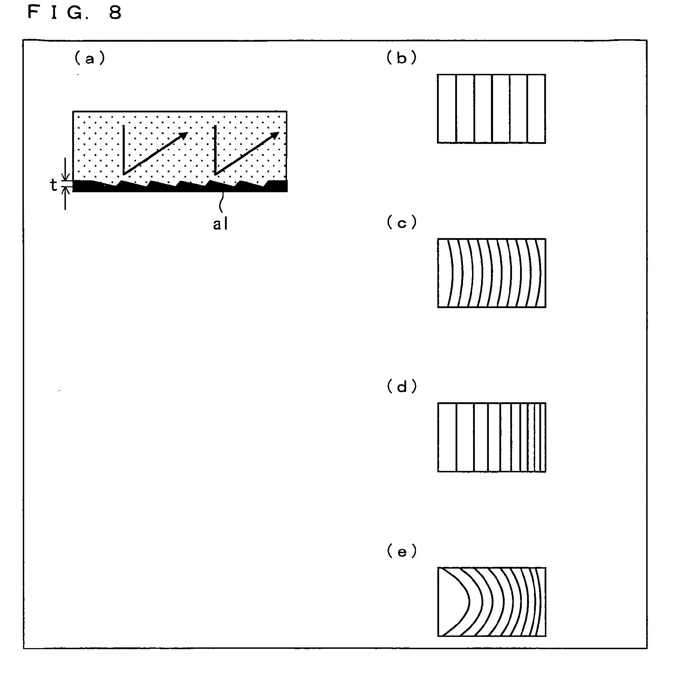

A third embodiment of the present invention is described below with reference to Fig. 7 and (a) through (c) of Fig. 8. Fig. 7 is a cross-sectional view schematically illustrating a configuration of an optical pointing device 30 of the third embodiment. The description below does not deal with points of the third embodiment that are identical to those of the first and second embodiments.

The optical pointing device 30 of the present embodiment is arranged, as illustrated in Fig. 7, such that light (light beam L) scattered by an object 1 and entering a light guide 6 at an entrance section 3 is reflected by a diffracting element 9b so that the light beam L travels in a light-guide direction, that is, in the positive direction of the y axis. In other words, the optical pointing device 30 of the present embodiment differs from the respective arrangements of the first and second embodiments in that it includes a diffracting element 9b as an optical path transforming section. The diffracting element 9b is, as illustrated in Fig. 7, provided (i) above a light source 2, (ii) below the entrance section 3, and (iii) at a position on a rear surface of the light guide 6 at which position the light guide is not in contact with a substrate section 12. The light beam L reflected by the diffracting element 9b has an optical path that has been so transformed as to extend toward a reflecting surface 8a.

The description below deals with a detailed shape of the diffracting element 9b with reference to Fig. 8. (a) of Fig. 8 is a cross-sectional view schematically illustrating a cross-sectional shape of the diffracting element 9b. The diffracting element 9b is a reflective diffracting element that utilizes + 1 order reflective diffracted light. The diffracting element 9b desirably has, for example, a blazed shape along its cross section as illustrated in (a) of Fig. 8 to generate strong +1 order light. Using a diffracting element 9b having a blazed shape illustrated in (a) of Fig. 8 improves light use efficiency, and can reduce stray light, namely 0 order light, -1 order light, and higher order diffracted light. This arrangement can thus prevent a decrease in image-forming performance of the optical system in the optical pointing device 30.

The diffracting element 9b is desirably provided with a reflecting film (for example, a film made of aluminum, silver, or gold or a dielectric dichroic film) deposited on an outer surface thereof (that is, a surface on the negative side of the z axis) for improved reflectance. Assuming that the blazed shape of the diffracting element 9b has a groove depth (that is, the length in the z direction) of t as illustrated in (a) of Fig. 8, the groove depth t is desirably a depth that maximizes + 1 order diffraction efficiency. For instance, the groove depth t desirably meets t = λ, / (2n), where n is the refractive index of the light guide 6, and λ is the wavelength of light emitted by the light source 2.

The blazed shape of the diffracting element 9b has a groove pattern of straight lines separated from one another by an equal pitch as in (b) of Fig. 8. The groove pattern is desirably as fine as possible to increase the diffraction angle to a maximum. The most cost-effective production method is to create grooves in a mold by a cutting process with use of a cutting tool and form a diffracting element with that mold. The diffracting element 9b is thus desirably designed to have a groove pitch within the range from 0.8 to 3.0 µm in order to accurately create grooves with use of a cutting process.

Further, to improve image-forming performance for forming an image of an object 1 to be projected on the image capturing section 7, the diffracting element 9b can have a groove pattern as illustrated in (c) of Fig. 8, that is, a groove pattern of curves. This arrangement can correct distortion in an image. The diffracting element 9b can alternatively be designed to have a pattern having a groove pitch that is not equal but that varies gradually as illustrated in (d) of Fig. 8. This arrangement achieves a lens effect for a certain single direction. This arrangement can consequently correct optical aberration (such as astigmatism, spherical aberration, and coma aberration) occurring on the image capturing section 7 due to a difference in focal length between the x axis direction and the y axis direction.

The diffracting element 9b can further alternatively have a groove pattern of curves that are separated from one another by an unequal pitch as illustrated in (e) of Fig. 8. This arrangement can correct distortion in an image and optical aberration (such as astigmatism, spherical aberration, and coma aberration).

The diffracting element 9b can be, as another specific example, a reflective Fresnel lens. Specifically, such a Fresnel lens, for instance, has a blazed shape along its cross section. The diffracting element 9b is desirably provided with a reflecting film (for example, a film made of aluminum, silver, or gold or a dielectric dichroic film) deposited on an outer surface thereof for improved reflectance. Using a Fresnel lens as the diffracting element 9b allows the thickness of the light guide 6 to be uniform in comparison with the case in which the light guide 6 includes a prism or a bulk-type lens. The above arrangement can thus increase the strength of the light guide 6 and yet reduce the thickness of the optical pointing device 30.

Further, using a hologram lens as the diffracting element 9b makes it possible to correct optical aberration (such as astigmatism, spherical aberration, and coma aberration) that a normal lens would not be capable of correcting completely. The above arrangement thus improves image-forming performance, and allows an image of an object 1 to be formed clearly on the image capturing section 7.

The optical pointing device 30, as described above, includes a diffracting element 9b to reflect a light beam, reflected by an object 1, so that the light beam travels in the horizontal direction (that is, in the positive direction of the y axis). This arrangement allows the thickness of the light guide 6 to be uniform in comparison with the case in which the light guide 6 includes a prism 9a. This arrangement can consequently increase the strength of the light guide 6 and yet reduce its thickness. This arrangement additionally allows a light beam M, emitted from the light source 2, to irradiate the entrance section 3 at a uniform light intensity.

An optical pointing device (for example, an arrangement of Patent Literature 1) for redirecting a light beam L, reflected by an object 1, to the horizontal direction has a design in which the thickness of the optical pointing device is greatly influenced by the size of the redirecting element (for example, a prism or diffracting element), particularly its length in the z axis direction. In other words, to design a thin optical pointing device, it is important to reduce the length of the redirecting element (for example, a prism or diffracting element) in the z axis direction. The size of a redirecting element (for example, a prism or diffracting element), however, cannot be freely designed, and depends on the size of a region for detecting an object 1. Detecting the pattern of an object 1 requires such a region to have at least a certain area. Thus, securing the area of a region for detecting an object 1 inevitably results in a large redirecting element (for example, a prism or diffracting element), which has in turn made it impossible to reduce the thickness of an optical pointing device (that is, its dimension in the z axis direction).

In contrast, the optical pointing device 30 of the present embodiment includes, as a redirecting element, a diffracting element 9b that can be smaller in dimension in the z axis direction than a prism. This arrangement can thus further reduce the thickness of the optical pointing device 30.

The optical pointing device 30 of the third embodiment is assembled by a method similar to the method described in the second embodiment, that is, by disposing the light guide 6 above the substrate section 12 on the basis of (i) the two side surfaces of the circuit board 11, (ii) respective side surfaces of the light-transmitting resins 2a and 7a on the negative side of the y axis, and (iii) respective side surfaces of the light-transmitting resins 2a and 7a on the positive side of the y axis and their respective upper surfaces. This arrangement allows the substrate section 12 and the light guide 6 to be precisely positioned relative to each other. This arrangement thus allows each section and element of the optical pointing device 30 to be positioned precisely, and makes it possible to produce an optical pointing device 30 that is high in accuracy of detecting an object 1. This arrangement, as a result, makes it possible to produce an optical pointing device that is thin and excellent in operability.

### [Fourth Embodiment]

Finally, with reference to Fig. 9, the description below deals with an electronic apparatus including an optical pointing device 40 mounted therein. Fig. 9 is a diagram illustrating an appearance of a mobile telephone 100 including the optical pointing device 40 mounted therein. (a) of Fig. 9 is an elevational view of the mobile telephone 100. (b) of Fig. 9 is a rear view of the mobile telephone 100. (c) of Fig. 9 is a side view of the mobile telephone 100. (a) through (c) of Fig. 9 each illustrate a mobile telephone as an example of the electronic apparatus. The electronic apparatus of the present invention is, however, not limited to that. The electronic apparatus is, for example, a PC (particularly a mobile PC), a PDA, a game device, and a remote control for a television or the like.

The mobile telephone 100, as illustrated in (a) through (c) of Fig. 9, includes a monitor-side housing 101 and an operation-side housing 102. The monitor-side housing 101 includes a monitor section 105 and a loudspeaker section 106. The operation-side housing 102 includes a microphone section 103, a ten-key pad 104, and an optical pointing device 40. The optical pointing device 40 to be mounted in the mobile telephone 100 may be any of the optical pointing devices 10, 20, and 30 described above in the first to third embodiments.

The optical pointing device 40 of the present embodiment is disposed above the ten-key pad 104 as illustrated in (a) of Fig. 9. The present invention is, however, not limited as such in terms of how the optical pointing device 40 is disposed and oriented.

The loudspeaker section 106 outputs audio information to the outside. The microphone section 103 inputs audio information into the mobile telephone 100. The monitor section 105 outputs video information, and in the present embodiment, displays information inputted through the optical pointing device 40.

The mobile telephone 100 of the present embodiment is arranged, as illustrated in (a) through (c) of Fig. 9, such that the upper housing (that is, the monitor-side housing 101) is hinged to the lower housing (that is, the operation-side housing 102). The mobile telephone is thus an example of a so-called foldable-type mobile telephone 100. The mobile telephone 100 of the present embodiment is a foldable-type mobile telephone as an example simply because the foldable-type is the mainstream. Thus, a foldable-type mobile telephone 100 is not the only mobile telephone that the optical pointing device 40 can be mounted in.

In recent years, there has been even a foldable-type mobile telephone 100 having a thickness of 10 mm or smaller in a state in which it is folded. When portability of a mobile telephone 100 is considered, its thickness is an extremely important aspect. The operation-side housing 102 illustrated in (a) through (c) of Fig. 9 has a thickness that is determined by, other than an internal circuit board (not shown) and the like, particular components, namely the microphone section 103, the ten-key pad 104, and the optical pointing device 40, among all of which the optical pointing device 40 has the largest thickness. This indicates that reduction in the thickness of the optical pointing device 40 directly leads to reduction in the thickness of the mobile telephone 100. The optical pointing device of the present invention, which can be thin as described above, is thus an invention that is suitable for an electronic apparatus, such as a mobile telephone 100, that needs to have a reduced thickness.

The present invention is not limited to the description of the embodiments above, but may be altered in various ways by a skilled person within the scope of the claims. Any embodiment based on a proper combination of technical means disclosed in different embodiments is also encompassed in the technical scope of the present invention.

As described above, an optical pointing device of the present invention is arranged such that the light guide guides the scattered light via no air through an optical path extending from (i) a position at which the scattered light enters the light guide to (ii) a position at which the scattered light exits the light guide.

As described above, an electronic apparatus of the present invention includes the optical pointing device.

The above arrangement reduces the number of components, and consequently achieves the advantage of producing (i) an ultrathin and easily assembled optical pointing device and (ii) an electronic apparatus including the optical pointing device.

The optical pointing device of the present invention may preferably be arranged such that the image forming section reflects the scattered light in a direction opposite to a light-guide direction.

According to the above arrangement, the image forming section reflects the scattered light in a direction opposite to a light-guide direction. The above arrangement can thus correct optical aberration and image distortion at the image capturing section as compared to an arrangement in which the light-guide direction corresponds to only a forward direction. The above arrangement consequently allows the image capturing section to obtain a high-quality object image. Further, since the image capturing section obtains a high-quality object image, the optical pointing device does not malfunction and has improved operability. In addition, since the image forming section reflects the light scattered by the object, the above arrangement can return the scattered light from the image forming section to the object side, which in turn makes it possible to produce an optical pointing device that is small in dimension along its width direction.

The optical pointing device of the present invention may preferably be arranged such that the light guide is provided with a reflecting surface on at least one of an upper surface and lower surface of the light guide.

The above arrangement causes the light, scattered by the object, to be reflected by the reflecting surface, and can consequently achieve a long optical path for the scattered light propagating through the inside of the light guide.

The optical pointing device of the present invention may preferably be arranged such that the light guide includes: an entrance section through which the scattered light enters the light guide; and an optical path transforming section for transforming an optical path of the scattered light, having entered the light guide through the entrance section, into a light-guide direction.

The above arrangement allows the light, which has been scattered by the object and has entered the light guide through the entrance section, to be guided to the side of the image forming section efficiently. The above arrangement can thus increase the amount of signal light received by the image capturing section from the object. Further, providing the optical path transforming section directly below the entrance section allows the light, scattered by the object, to be guided toward the image forming section efficiently.

An electronic apparatus of the present invention preferably includes the optical pointing device.

According to the above arrangement, the electronic apparatus includes the optical pointing device, of which the thickness can be reduced easily. In the case where an electronic apparatus includes an optical pointing device mounted therein, the thickness of the optical pointing device greatly influences the thickness of the electronic apparatus. Thus, the electronic apparatus, although including the optical pointing device, can have a reduced thickness.

The optical pointing device of the present invention may preferably be arranged such that the optical path transforming section is a prism or a diffracting element. Disposing such an optical path transforming section directly below the entrance section allows the light, scattered by the object, to be guided toward the image forming section efficiently.

The optical pointing device of the present invention may preferably be arranged such that the exit section of the light guide is separated from the image capturing section.

With the above arrangement, in the case where, for assembly of the optical pointing device, the light guide is disposed on a circuit board on which the light source and the image capturing section are mounted, it is possible to detect motion of the object. In the case where the exit section of the light guide is separated from the image capturing section without being adhered thereto, the optical pointing device can be used in, for example, inspecting a circuit board or the like for a defect.

The optical pointing device of the present invention may preferably be arranged such that the exit section of the light guide is separated from the image capturing section by a gap that is filled with (i) a material having a refractive index equal to a refractive index of the light guide at a particular wavelength or (ii) a material having a refractive index that is only slightly different from the refractive index of the light guide. In the case where the exit section of the light guide is separated from the image capturing section by a gap that is filled with a resin material having a refractive index that is equivalent to that of the light guide or that is only slightly different from that of the light guide, a light beam can be emitted that would not be able to reach the image capturing section due to total reflection if there is air behind the exit section of the light guide. In other words, the above arrangement allows the light, scattered by the object, to be guided as image forming light to the image capturing section efficiency. The above arrangement can increase an image margin at the image capturing section, and improves assembly facility. Further, in the case where the exit section of the light guide is separated from the image capturing section by a gap that is filled with a resin, it is possible to improve strength of the optical pointing device, thereby making it possible to produce a device that is excellent in durability.

### Industrial Applicability

The present invention is applicable to an input device such as a PC and a mobile telephone, and is, in particular, suitably applicable to a portable device that needs to be small and thin.

### Reference Signs List

- 1: object (finger)
- 2: light source
- 2a: light-transmitting resin
- 3: entrance section
- 4: image forming section
- 5: exit section
- 6: light guide
- 7: image capturing section
- 7a: light-transmitting resin
- 8a: reflecting surface
- 8b: reflecting surface
- 9a: prism (optical path transforming section)
- 9b: diffracting element (optical path transforming section)
- 10a: light blocking section
- 10b: light blocking section
- 10c: light blocking section
- 11: circuit board
- 12: substrate section
- 10, 20, 30, 40: optical pointing device
- 100: compact electronic apparatus
- 101: monitor-side housing
- 102: operation-side housing
- 103: microphone section
- 104: ten-key pad
- 105: monitor section
- 106: loudspeaker section
- L: light beam
- M: light beam

## Claims

1. An optical pointing device comprising:
a light source for emitting light to an object;
a light guide for propagating therethrough light having been scattered by the object, the light guide including an image forming section for forming an image with use of the scattered light; and
an image capturing section for capturing the image with use of the scattered light having exited the light guide,
the light guide guiding the scattered light via no air through an optical path extending from (i) a position at which the scattered light enters the light guide to (ii) a position at which the scattered light exits the light guide.

2. The optical pointing device according to claim 1,
wherein:
the image forming section reflects the scattered light in a direction opposite to a light-guide direction.

3. The optical pointing device according to claim 1 or 2,
wherein:
the light guide is provided with a reflecting surface on at least one of an upper surface and lower surface of the light guide.

4. The optical pointing device according to any one of claims 1 to 3,
wherein:
the light guide includes:
an entrance section through which the scattered light enters the light guide; and
an optical path transforming section for transforming an optical path of the scattered light, having entered the light guide through the entrance section, into a light-guide direction.

5. An electronic apparatus comprising:
the optical pointing device according to any one of claims 1 to 4.
